# EUROPEAN PATENT APPLICATION

(11) **EP 4 804 449 A1**
(43) Date of publication of application: **09.09.2026**
(21) Application number: 24896299.5
(22) Date of filing: 15.11.2024
(51) Int. Cl.: H04L 5/00, H04B 7/0456

(54) **COMMUNICATION METHOD AND RELATED APPARATUS**

(30) Priority: 28.11.2023 CN 202311615652
(71) Applicant: Huawei Technologies Co., Ltd., Shenzhen, Guangdong 518129 (CN)
(72) Inventor: JIANG, Yisheng, Shenzhen, Guangdong 518129 (CN); BI, Xiaoyan, Shenzhen, Guangdong 518129 (CN); WANG, Lei, Shenzhen, Guangdong 518129 (CN)
(74) Representative: Grünecker Patent- und Rechtsanwälte PartG mbB
(86) International application number: PCT/CN2024/132426
(87) International publication number: WO 2025/113208

(57) **Abstract**

This application provides a communication method and a related apparatus, applied to the field of communication technologies. In technical solutions provided in this application, a terminal device sends a reference signal, and receives, from a network device, first information indicative of a first interpolation method. The first interpolation method is used to perform interpolation processing on a first precoding indicator. The first precoding indicator includes a precoding indicator corresponding to each of a first part of subbands, and the first part of subbands includes partial subbands in a bandwidth occupied by the reference signal; or the first precoding indicator includes a precoding indicator corresponding to each of a first part of antenna ports, and the first part of antenna ports includes partial antenna ports occupied by the reference signal. The interpolation method provided in this application improves precoding accuracy, and reduces signaling overheads of uplink precoding.

## Description

This application claims priority to Chinese Patent Application No. 202311615652.1, filed with the China National Intellectual Property Administration on November 28, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In codebook-based (code based, CB) uplink transmission in communication systems, user equipment (user equipment, UE) sends a reference signal (reference signal, RS). After measuring the received RS, a network device delivers a transmit precoding matrix indicator (transmit precoding matrix indicator, TPMI) to the UE, and the UE sends an uplink data channel to the network device based on the PMI, where the PMI can be used to map the uplink data channel to a corresponding antenna port.

With development of the communication systems, communication resources are becoming increasingly scarce. Therefore, how to save communication resources has become a technical problem to be urgently resolved.

### SUMMARY

This application provides a communication method and a related apparatus, to reduce uplink MIMO precoding indication overheads, thereby improving communication performance.

According to a first aspect, this application provides a communication method. The method is applied to a terminal device. The method includes: sending a reference signal; and receiving first information from a network device. The first information indicates a first interpolation method. The first interpolation method is used to perform interpolation processing on a first precoding indicator. The first precoding indicator includes a precoding indicator corresponding to each of a first part of subbands, and the first part of subbands includes partial subbands in a bandwidth occupied by the reference signal; or the first precoding indicator includes a precoding indicator corresponding to each of a first part of antenna ports, and the first part of antenna ports includes partial antenna ports occupied by the reference signal.

In the method, according to the interpolation method indicated by the network device, the terminal device restores all subband or spatial-domain precoding based on a part of received subband or spatial-domain precoding indicators, and then can map an uplink data channel to a corresponding antenna port based on the obtained precoding information, to send an uplink signal.

In some possible implementations, the first interpolation method is a manifold interpolation method.

In the method, the terminal device performs, according to the manifold interpolation method, interpolation calculation on the part of subband or spatial-domain precoding indicators indicated by the network device, to obtain all the subband or spatial-domain precoding.

In some possible implementations, when the first precoding indicator includes the precoding indicator corresponding to each of the first part of subbands, the method further includes: receiving second information from the network device, where the second information indicates at least one of the following information: a quantity of resource blocks RBs occupied by each subband, a location of each of the first part of subbands in the bandwidth, a quantity of precoding indicators included in the first precoding indicator, an angle variation between precoding vectors indicated by precoding indicators corresponding to subbands in the bandwidth, or distribution of precoding indicators corresponding to subbands in the bandwidth.

In the method, the network device uses an additional parameter related to the manifold interpolation method, to simplify an interpolation calculation process, and ensure subband precoding accuracy, thereby reducing a calculation amount of the terminal device, and reducing signaling overheads of uplink precoding.

In some possible implementations, when the first precoding indicator includes the precoding indicator corresponding to each of the first part of antenna ports, the method further includes: receiving third information from the network device, where the third information indicates at least one of the following information: a quantity of antennas included in each antenna port, a location of each of the first part of antenna ports in the antenna ports occupied by the reference signal, a quantity of precoding indicators included in the first precoding indicator, an angle variation between precoding vectors indicated by precoding indicators corresponding to the antenna ports occupied by the reference signal, or distribution of precoding indicators corresponding to antenna ports in the antenna ports occupied by the reference signal.

In some possible implementations, that the second information indicates the angle variation includes: The second information indicates an index of the angle variation.

In some possible implementations, that the second information indicates the distribution includes: The second information indicates an index of the distribution.

In some possible implementations, that the first information indicates the first interpolation method includes: The first information indicates an index of the first interpolation method among a plurality of interpolation methods.

In some possible implementations, the method further includes: sending fourth information to the network device, where the fourth information indicates an interpolation method supported by the terminal.

According to a second aspect, this application provides a communication method. The method is applied to a network device. The method includes: receiving a reference signal from a terminal device; and sending first information. The first information indicates a first interpolation method. The first interpolation method is used to perform interpolation processing on a first precoding indicator. The first precoding indicator includes a precoding indicator corresponding to each of a first part of subbands, and the first part of subbands includes partial subbands in a bandwidth occupied by the reference signal; or the first precoding indicator includes a precoding indicator corresponding to each of a first part of antenna ports, and the first part of antenna ports includes partial antenna ports occupied by the reference signal.

In the method, according to the interpolation method indicated by the network device to the terminal device, the terminal device restores all subband or spatial-domain precoding based on a part of received subband or spatial-domain precoding indicators, and then can map an uplink data channel to a corresponding antenna port based on the obtained precoding information, to send an uplink signal.

In some possible implementations, the first interpolation method is a manifold interpolation method.

In the method, the terminal device performs, according to the manifold interpolation method, interpolation calculation on the part of subband or spatial-domain precoding indicators indicated by the network device, to obtain all the subband or spatial-domain precoding.

In some possible implementations, when the first precoding indicator includes the precoding indicator corresponding to each of the first part of subbands, the method further includes: sending second information, where the second information indicates at least one of the following information: a quantity of resource blocks RBs occupied by each subband, a location of each of the first part of subbands in the bandwidth, a quantity of precoding indicators included in the first precoding indicator, an angle variation between precoding vectors indicated by precoding indicators corresponding to subbands in the bandwidth, or distribution of precoding indicators corresponding to subbands in the bandwidth.

In the method, the network device uses an additional parameter related to the manifold interpolation method, to simplify an interpolation calculation process, and ensure subband precoding accuracy, thereby reducing a calculation amount of the terminal device, and reducing signaling overheads of uplink precoding.

In some possible implementations, when the first precoding indicator includes the precoding indicator corresponding to each of the first part of antenna ports, the method further includes: sending third information, where the third information indicates at least one of the following information: a quantity of antennas included in each antenna port, a location of each of the first part of antenna ports in the antenna ports occupied by the reference signal, a quantity of precoding indicators included in the first precoding indicator, an angle variation between precoding vectors indicated by precoding indicators corresponding to the antenna ports occupied by the reference signal, or distribution of precoding indicators corresponding to antenna ports in the antenna ports occupied by the reference signal.

In some possible implementations, that the second information indicates the angle variation includes: The second information indicates an index of the angle variation.

In some possible implementations, that the second information indicates the distribution includes: The second information indicates an index of the distribution.

In some possible implementations, that the first information indicates the first interpolation method includes: The first information indicates an index of the first interpolation method among a plurality of interpolation methods.

In some possible implementations, the method further includes: sending fourth information to the network device, where the fourth information indicates an interpolation method supported by the terminal.

According to a third aspect, this application provides a communication apparatus, including a module or a unit configured to implement the method according to any one of the first aspect and the possible implementations of the first aspect. It should be understood that each module or unit may implement a corresponding function by executing a computer program.

According to a fourth aspect, this application provides a communication apparatus, including a module or a unit configured to implement the method according to any one of the second aspect and the possible implementations of the second aspect. It should be understood that each module or unit may implement a corresponding function by executing a computer program.

According to a fifth aspect, this application provides a communication apparatus, including a processor. The processor is configured to perform the communication method according to any one of the first aspect or the possible implementations of the first aspect. The communication apparatus may be a chip or a chip system used in a terminal device.

The apparatus may further include a memory configured to store instructions and data. The memory is coupled to the processor. When the processor executes the instructions stored in the memory, the method described according to any one of the first aspect or the possible implementations of the first aspect may be implemented. The apparatus may further include a communication interface. The communication interface is used by the apparatus to communicate with another device. For example, the communication interface may be a transceiver, a circuit, a bus, a module, or another type of communication interface.

According to a sixth aspect, this application provides a communication apparatus, including a processor. The processor is configured to perform the communication method according to any one of the second aspect or the possible implementations of the second aspect. The communication apparatus may be a chip or a chip system used in a terminal device.

The apparatus may further include a memory configured to store instructions and data. The memory is coupled to the processor. When the processor executes the instructions stored in the memory, the method described according to any one of the second aspect or the possible implementations of the second aspect may be implemented. The apparatus may further include a communication interface. The communication interface is used by the apparatus to communicate with another device. For example, the communication interface may be a transceiver, a circuit, a bus, a module, or another type of communication interface.

According to a seventh aspect, this application provides a computer-readable storage medium. The computer-readable medium stores program code to be executed by a communication apparatus, and the program code includes instructions for implementing the method according to any one of the first aspect and the possible implementations of the first aspect.

According to an eighth aspect, this application provides a computer-readable storage medium. The computer-readable medium stores program code to be executed by a communication apparatus, and the program code includes instructions for implementing the method according to any one of the second aspect and the possible implementations of the second aspect.

According to a ninth aspect, this application provides a computer program product including instructions. When the computer program product runs on a communication apparatus, the communication apparatus is caused to implement the method according to any one of the first aspect and the possible implementations of the first aspect.

According to a tenth aspect, this application provides a computer program product including instructions. When the computer program product runs on a communication apparatus, the communication apparatus is caused to implement the method according to any one of the second aspect and the possible implementations of the second aspect.

According to an eleventh aspect, this application provides a communication system. The communication system includes a communication apparatus configured to implement the method according to any one of the first aspect and the possible implementations of the first aspect and/or a communication apparatus configured to implement the method according to any one of the second aspect and the possible implementations of the second aspect.

### BRIEF DESCRIPTION OF DRAWINGS

FIG. 1 is a diagram of a communication system applicable to a method according to an embodiment of this application;
FIG. 2 is a diagram of another communication system applicable to a method according to an embodiment of this application;
FIG. 3 is a schematic flowchart of a communication method according to an embodiment of this application;
FIG. 4 is a diagram of obtaining a subband precoding indicator in frequency domain;
FIG. 5 is a diagram of distribution of interpolation points between precoding vectors;
FIG. 6 shows distribution of interpolation points in three example interpolation methods according to this application;
FIG. 7 is a diagram of obtaining a subband precoding indicator in spatial domain;
FIG. 8 is a diagram of a structure of a communication apparatus according to an embodiment of this application; and
FIG. 9 is a diagram of a structure of a communication apparatus according to another embodiment of this application.

### DESCRIPTION OF EMBODIMENTS

The following describes the technical solutions in embodiments of this application with reference to the accompanying drawings in embodiments of this application.

For ease of clearly describing the technical solutions in embodiments of this application, terms such as "first" and "second" are used in embodiments of this application to distinguish between same items or similar items that have basically same functions and purposes. A person skilled in the art may understand that the terms such as "first" and "second" do not limit a quantity or an execution sequence, and the terms such as "first" and "second" do not indicate a definite difference.

It should be noted that, in embodiments of this application, the word like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of multiple items (pieces). For example, at least one of a, b, and (or) c may indicate a, b, c, a and b, a and c, b and c, or a, b, and c, where a, b, and c may be singular or plural.

To facilitate understanding of a communication method provided in embodiments of this application, the following describes a system architecture and an application scenario of the communication method provided in embodiments of this application. It may be understood that the system architecture and the application scenario described in embodiments of this application are intended to describe the technical solutions in embodiments of this application more clearly, and do not constitute a limitation on the technical solutions provided in embodiments of this application.

In an evolution process of communication technologies, a high throughput and massive connectivity have always been core challenges for a wireless communication network. A multi-input multi-output (Multi-input Multi-output, MIMO) technology is used as a key technology that can significantly improve a system capacity, to satisfy a high-rate transmission requirement. In the technology, an array gain, multiplexing and diversity gains, and a co-channel interference reduction gain in space can be obtained for a signal by using a resource in a space dimension without increasing a system bandwidth, so that a capacity and spectral efficiency of a communication system can be exponentially improved.

The communication field is combined with MIMO technology application. The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6th generation (6th generation, 6G) mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system, for example, a 6th generation (6th generation, 6G) communication system.

A device in the communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device.

In embodiments of this application, the terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a wearable device, a terminal device in a 5G network, a terminal device in a future evolved public land mobile network (public land mobile network, PLMN), and the like. This is not limited in embodiments of this application.

By way of example and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or some functions without depending on a smartphone, for example, a smart watch or smart glasses, and includes devices that are dedicated to only one type of application function and need to collaboratively work with other devices such as smartphones, for example, various smart bands or smart jewelry for monitoring physical signs.

In embodiments of this application, an apparatus configured to implement a function of the terminal device may be a terminal device, or may be an apparatus that can support the terminal device in implementing the function, for example, a chip system, where the apparatus may be installed in the terminal device or used in matching with the terminal device. In embodiments of this application, the chip system may include a chip, or may include a chip and another discrete device. In embodiments of this application, an example in which the apparatus configured to implement the function of the terminal device is the terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a radio-frequency head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application. In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, compared with the CPRI, the interface moves a part of downlink and/or uplink baseband functions. For example, for downlink, one or more of precoding (precoding), digital beamforming (beamforming, BF), or inverse fast Fourier transform (inverse fast Fourier transform, IFFT)/cyclic prefix (cyclic prefix, CP) addition is moved from the DU to the RU for implementation; and for uplink, one or more of digital beamforming (beamforming, BF) or fast Fourier transform (fast Fourier transform, FFT)/cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, different split manners between the DU and the RU correspond to different categories (categories, Cats) of eCPRIs, such as eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of RE mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions after the demapping (for example, one or more of digital BF or fast Fourier transform (fast Fourier transform, FFT)/CP removal) are moved to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support the network device in implementing the function, for example, a chip system, a hardware circuit, a software module, or a combination of a hardware circuit and a software module. The apparatus may be installed in the network device or used in matching with the network device. In embodiments of this application, an example in which the apparatus configured to implement the function of the network device is the network device is merely used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. A scenario in which the network device and the terminal device are located is not limited in embodiments of this application. In addition, the terminal device or the network device may be a hardware device, a software function running on dedicated hardware, a software function running on general-purpose hardware, for example, a virtualization function instantiated on a platform (for example, a cloud platform), or an entity including a dedicated or general-purpose hardware device and a software function. Specific forms of the terminal device and the network device are not limited in this application.

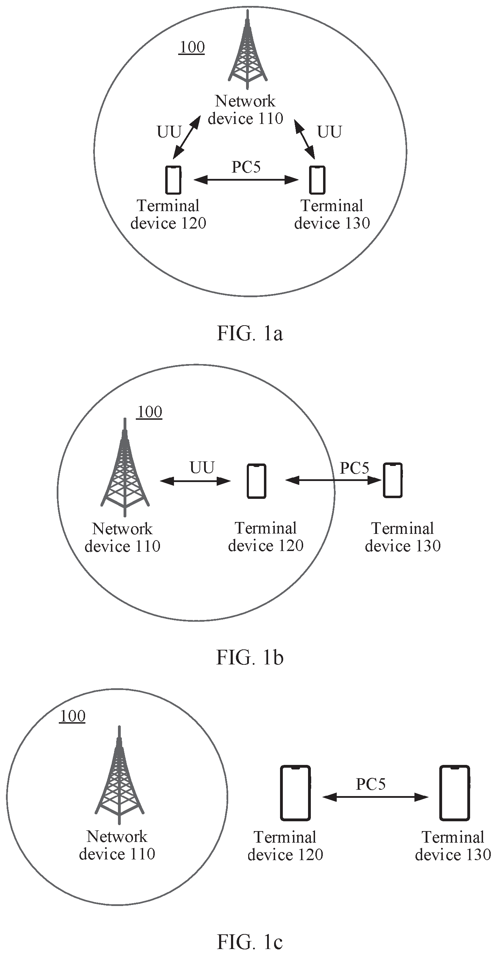

FIG. 1 is a diagram of a communication system applicable to a method according to an embodiment of this application. As shown in FIG. 1, the communication system 100 may include at least one network device, for example, a network device 110 shown in FIG. 1. The communication system 100 may further include at least one terminal device, for example, a terminal device 120 and a terminal device 130 shown in FIG. 1.

In the communication system shown in FIG. 1a, both the terminal device 120 and the terminal device 130 may be in coverage of a cell service provided by the network device 110. In the communication system shown in FIG. 1b, only one of the terminal devices, for example, the terminal device 120, may be in the coverage of the cell service provided by the network device 110. In the communication system shown in FIG. 1c, neither of the terminal devices may be in the coverage of the cell service provided by the network device 110.

The network device 110 may perform radio link communication with the terminal device 120 and the terminal device 130 through a UU (UTRAN-to-UE) air interface, and the terminal device 120 and the terminal device 130 may directly perform wireless communication through a PC5 air interface. Communication devices in the communication system, for example, the network device 110, the terminal device 120, and the terminal device 130, may communicate with each other by using a multi-antenna technology.

In an example, a single network device may transmit data or control signaling to one or more terminal devices, and/or a plurality of network devices may simultaneously transmit data or control signaling to a single terminal device.

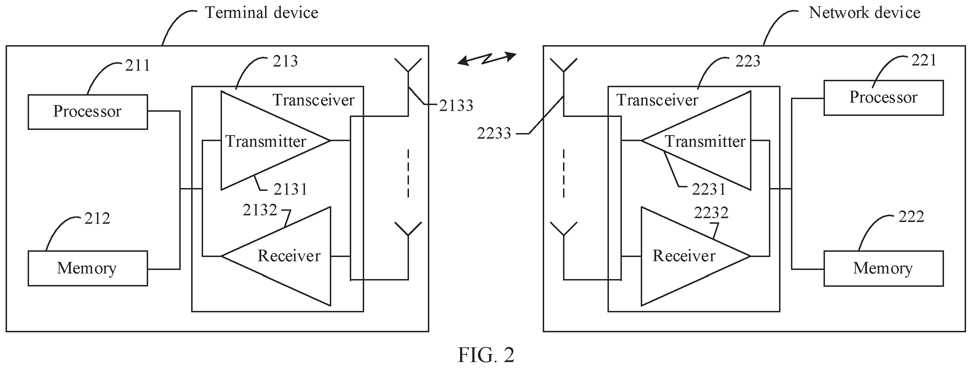

FIG. 2 is a diagram of another communication system applicable to a method according to an embodiment of this application. As shown in FIG. 2, a terminal device includes a processor 211, a memory 212, and a transceiver 213. The transceiver 213 includes a transmitter 2131, a receiver 2132, and an antenna 2133. A network device includes a processor 221, a memory 222, and a transceiver 223. The transceiver 223 includes a transmitter 2231, a receiver 2232, and an antenna 2233.

The processor 211, the memory 212, and the transceiver 213 communicate with each other through an internal connection path, and the processor 221, the memory 222, and the transceiver 223 communicate with each other through an internal connection path.

The receiver 2132 may be configured to receive transmission control information through the antenna 2133, and the transmitter 2131 may be configured to send transmission feedback information to the network device through the antenna 2133. The transmitter 2231 may be configured to send the transmission control information to the terminal device through the antenna 2233, and the receiver 2232 may be configured to receive, through the antenna 2233, the transmission feedback information sent by the terminal device.

It should be noted that FIG. 1 and FIG. 2 are merely simplified diagrams used as examples for ease of understanding. In actual application, the communication system may include a plurality of network devices, or may include a plurality of terminal devices. Quantities of network devices and terminal devices included in the communication system are not limited in embodiments of this application.

Currently, in CB-based uplink transmission in a MIMO system, a terminal sends a reference signal RS, a network device delivers a transmit precoding matrix indicator TPMI to the terminal after measuring the received RS, and the terminal sends an uplink data channel to the network device based on the PMI, where the PMI can be used to map the uplink data channel to a corresponding antenna port.

As a quantity of antennas of a wireless network device increases, more UEs can be accessed. Therefore, in a multi-user multiple-input multiple-output (multi-user multiple-Input multiple-output, MU-MIMO) scenario, a high-precision uplink codebook needs to be considered. In addition, as a bandwidth increases, a subband precoding codebook is considered in uplink. Therefore, uplink codebook indication overheads are extremely high.

An example application scenario of the communication method in this application is that in CB-based uplink transmission in a MIMO system, a network device indicates a precoding-related method to a UE, to reduce signaling overheads of uplink precoding, thereby improving performance of a communication system.

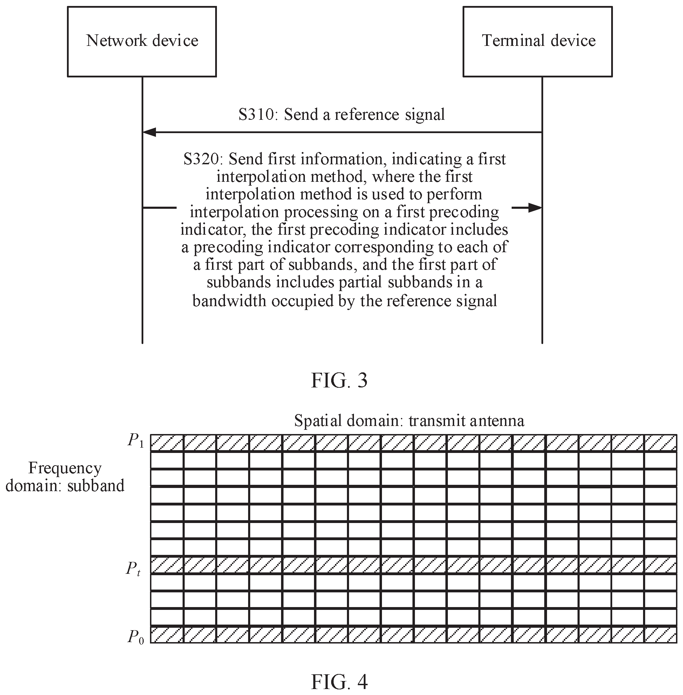

The following describes the communication method provided in this application with reference to specific embodiments. FIG. 3 is a schematic flowchart of a communication method according to an embodiment of this application. As shown in FIG. 3, the method may include S310 and S320.

S310: A terminal device sends a reference signal to a network device. Correspondingly, the network device receives the reference signal.

In an example, the reference signal is used for uplink channel measurement. In other words, the network device may perform uplink channel measurement based on the reference signal.

In some possible implementations, the terminal device may send the reference signal to the network device on a plurality of antenna ports.

In an example, the reference signal may be referred to as a pilot signal.

In an example, the reference signal may be a sounding reference signal (sounding reference signal, SRS).

S320: The network device sends first information to the terminal device, where the first information indicates a first interpolation method, the first interpolation method is used to perform interpolation processing on a first precoding indicator, the first precoding indicator includes a precoding indicator corresponding to each of a first part of subbands, and the first part of subbands includes partial subbands in a bandwidth occupied by the reference signal. Correspondingly, the terminal device receives the first information.

In an example, the first information may be carried in radio resource control (radio resource control, RRC) signaling, downlink control information (downlink control information, DCI), or media access control-control element (media access control-control element, MAC-CE) signaling.

It may be understood that the precoding indicator corresponding to the subband may be understood as a precoding indicator that needs to be used to send information on the subband.

In some possible implementations, the precoding indicator in this embodiment may be a transmit precoding matrix indicator (transmit precoding matrix indicator, TPMI).

In an example, the first information may include identification information of the first interpolation method and the first precoding indicator. To be specific, the network device indicates, by using the first information, the terminal to perform interpolation processing on the first precoding indicator according to the first interpolation method, to obtain a precoding indicator of another subband in the bandwidth occupied by the reference signal, or to obtain precoding indicators of all subbands in the bandwidth occupied by the reference signal. An interpolation point represents a location at which interpolation needs to be performed on an obtained subband, and a value obtained by performing interpolation calculation at the interpolation point is a precoding indicator corresponding to the subband.

For example, as shown in FIG. 4, the bandwidth occupied by the terminal in frequency domain includes 12 subbands, and the first precoding indicator indicated by the network device to the terminal includes a precoding indicator of a subband *P*₀ and a precoding indicator of a subband *P*₁ . The terminal may perform interpolation based on the indication of the first information to obtain a precoding indicator of another subband, for example, a subband *Pₜ* .

In some possible implementations, the first information may include an index of the first interpolation method among a plurality of interpolation methods. In other words, the identification information of the first interpolation method is the index of the first interpolation method in the plurality of interpolation methods.

In some possible implementations, when the first precoding indicator includes the precoding indicator corresponding to each of the first part of subbands,
in an example, second information may indicate at least one of the following information: a quantity of resource blocks (resource blocks, RBs) occupied by each subband, which may also be referred to as a subband precoding granularity; a location of each of the first part of subbands in the bandwidth; a quantity of precoding indicators included in the first precoding indicator, indicating a quantity of interpolation points for subband precoding; an angle variation between precoding vectors indicated by precoding indicators corresponding to subbands in the bandwidth; or distribution of precoding indicators corresponding to subbands in the bandwidth, indicating distribution of subband interpolation points.

In some possible implementations, the first information and the second information may be carried in a same message.

In some possible implementations, the first interpolation method may be a precoding method based on manifold interpolation or a method based on linear interpolation.

It may be understood that the manifold interpolation-based precoding method or the linear interpolation-based method is merely an example, and any method that can be used to restore, based on a precoding indicator corresponding to partial subbands, a precoding indicator corresponding to another subband to obtain precoding indicators corresponding to all subbands should fall within the protection scope of the first interpolation method in this application.

When the first interpolation method is the manifold interpolation-based precoding method or the linear interpolation-based method, in some possible implementations, the first precoding indicator may include precoding vectors respectively corresponding to two subbands in subbands of the reference signal, the two subbands may be respectively referred to as a first subband and a second subband, and the two precoding vectors may be respectively denoted as a precoding vector *P*₀ and a precoding vector *P*₁.

In some possible implementations, the first subband may be a 1^{st} subband, or an initial subband, or a subband with a minimum frequency in frequency domain among subbands included in the bandwidth occupied by the reference signal. Optionally, a location of the first subband in the bandwidth occupied by the reference signal may be dynamically indicated by the second information sent by the network device, or may be preconfigured. Correspondingly, the terminal device receives the second information.

In some possible implementations, the second subband may be a last subband, or an end subband, or a subband with a maximum frequency in frequency domain in the subbands included in the bandwidth occupied by the reference signal. Optionally, a location of the second subband in the bandwidth occupied by the reference signal may be dynamically indicated by the second information, or may be preconfigured. Correspondingly, the terminal device receives the second information.

A first example of a manifold interpolation relation satisfied between the precoding vector *P*₀ and the precoding vector *P*₁ is as follows: ${P}_{0}^{H} {P}_{1} = cos \left(θ\right) ⋅ {e}^{+ jϕ}$ $α \left(θ, ϕ, t\right) = \left(cos\left(t⋅θ\right)-cos\left(θ\right)⋅\frac{sin \left(t⋅θ\right)}{sin \left(θ\right)}\right) ⋅ {e}^{+ jϕ ⋅ t}$ $β \left(θ, ϕ, t\right) = \frac{sin \left(t⋅θ\right)}{sin \left(θ\right)} ⋅ {e}^{+ jϕ ⋅ \left(t-1\right)}$ ${P}_{t} = {P}_{0} ⋅ α \left(θ, ϕ, t\right) + {P}_{1} ⋅ β \left(θ, ϕ, t\right)$

*θ* is a spatial angle between the precoding vector *P*₀ and the precoding vector *P*₁, ø is a propagation rotation angle between the precoding vector *P*₀ and the precoding vector *P*₁, 0 ≤ *t* ≤ 1, and *Pₜ* represents a precoding vector of a subband associated with t.

In an example, a value of t may be determined based on a location of the subband associated with t.

For example, the bandwidth occupied by the reference signal includes 10 subbands, and the first part of subbands includes a 1^{st} subband and an end subband in the 10 subbands. To be specific, two precoding indicators included in the first precoding indicator are respectively a precoding indicator corresponding to the 1^{st} subband and a precoding indicator corresponding to the end subband in the 10 subbands. In this case, t may have 10 values, where a first value is 0, a second value is 1/9, a third value is 2/9, ..., and by analogy, a tenth value is 1.

It may be understood that one or more of *θ*, *ϕ*, *α*(*θ,ϕ,t*)*,* and *β*(*θ,ϕ,t*) in the first example may be indicated by the network device to the terminal by using the second information, or may be obtained by the terminal through calculation according to the foregoing relation or a variant of the foregoing relation.

A second example of the manifold interpolation relation satisfied between the precoding vector *P*₀ and the precoding vector *P*₁ is as follows: ${P}_{0}^{H} {P}_{1} = cos \left(θ\right) ⋅ {e}^{+ jϕ}$ $α \left(θ, ϕ, t\right) = \left(cos\left({θ}_{t}\right)-cos\left(θ\right)⋅\frac{sin \left({θ}_{t}\right)}{sin \left(θ\right)}\right) ⋅ {e}^{+ jϕ ⋅ t}$ $β \left(θ, ϕ, t\right) = \frac{sin \left({θ}_{t}\right)}{sin \left(θ\right)} ⋅ {e}^{+ jϕ ⋅ \left(t-1\right)}$ ${θ}_{t} = \frac{θ}{n} - \frac{n - 1}{2} Δ θ + \left(nt-1\right) Δ θ$

*n* is a quantity of interpolation points, and Δ*θ* is an interpolation parameter.

In an example, n may be determined based on a quantity of subbands included in the bandwidth occupied by the reference signal and/or a quantity of subbands included in a first part of the bandwidth. For example, when the bandwidth occupied by the reference signal includes 10 subbands, and the first part of subbands includes a 1^{st} subband and an end subband in the 10 subbands, a value of n may be 1, 1/9, 2/9, 3/9, ..., or 1.

It may be understood that *θₜ* in the second example relation may be indicated by the network device to the terminal by using the second information, or may be obtained by the terminal through calculation according to the foregoing relation or a variant of the foregoing relation.

It may be understood that Δ*θ* in the second example relation may be indicated by the network device to the terminal by using the second information.

A third example of the manifold interpolation relation satisfied between the precoding vector *P*₀ and the precoding vector *P*₁ is as follows: ${P}_{0}^{H} {P}_{1} = cos \left(θ\right) ⋅ {e}^{+ jϕ}$ $α \left(θ, ϕ, t\right) = \left(cos\left({θ}_{t}\right)-cos\left(θ\right)⋅\frac{sin \left({θ}_{t}\right)}{sin \left(θ\right)}\right) ⋅ {e}^{+ jϕ ⋅ t}$ $β \left(θ, ϕ, t\right) = \frac{sin \left({θ}_{t}\right)}{sin \left(θ\right)} ⋅ {e}^{+ jϕ ⋅ \left(t-1\right)}$

θ, may be obtained based on distribution of interpolation points, or may indicate distribution of interpolation points.

In an example, the distribution of the interpolation points is $\left\{{θ}_{t}\left|t=\frac{1}{n},\frac{2}{n},⋯,\frac{n - 1}{n}\right.\right\}$ or *θₜ* = *f*(*t*)*,* where *0<t<1.*

It may be understood that the distribution of the interpolation points may alternatively be represented by using a table.

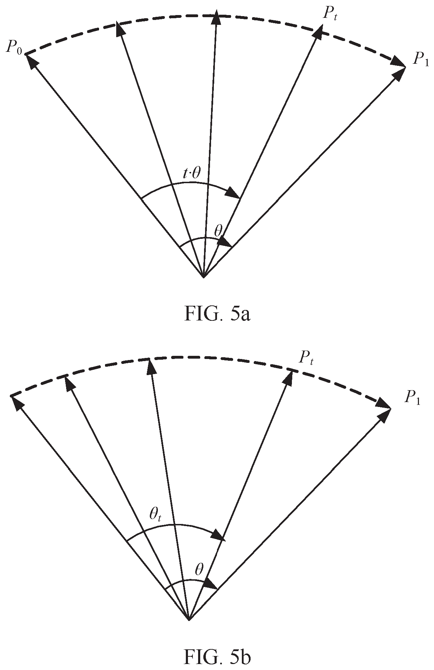

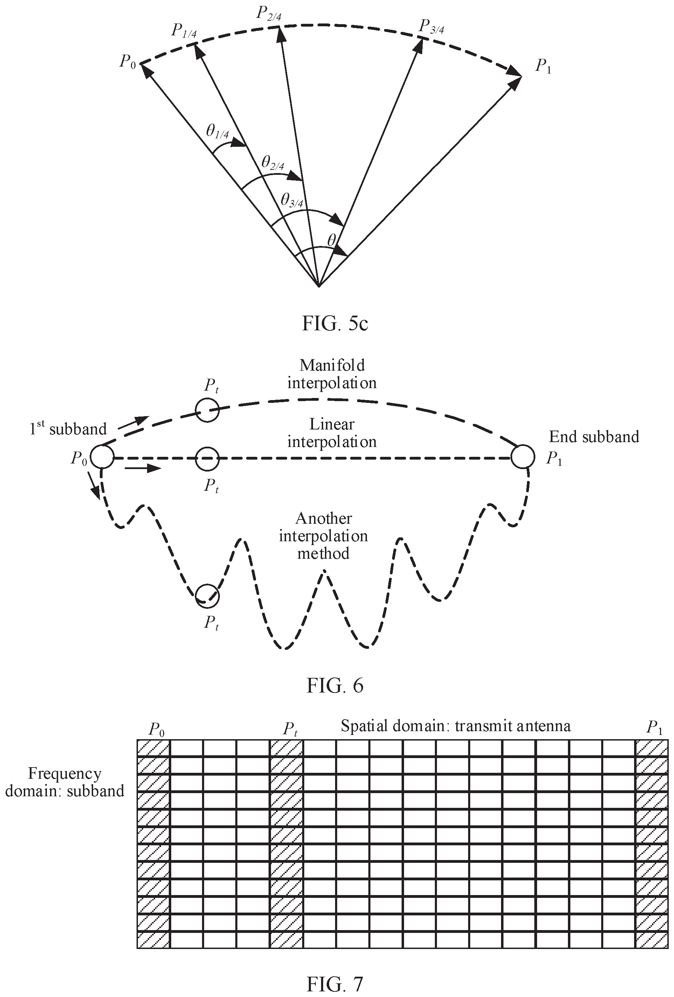

The following describes distribution features of the interpolation points in the foregoing three examples with reference to FIG. 4. FIG. 5a and FIG. 5b are respectively diagrams of a constant-speed angle change and a variable-speed angle change between precoding vectors. FIG. 5c is a diagram of distribution of interpolation points when an angle between precoding vectors changes at a variable speed and the interpolation points *n* = 4 .

As shown in FIG. 5a, an angle variation between the precoding vector *P*₀ and the precoding vector *P*₁ is constant.

As shown in FIG. 5b, an angle variation between the precoding vector *P*₀ and the precoding vector *P*₁ is larger.

As shown in FIG. 5c, an angle variation between the precoding vector *P*₀ and a precoding vector *P*_{1/4} at a first interpolation point is Δ*θ*₁ = *θ*_{1/4} ; an angle variation between the precoding vector *P*_{1/4} at the first interpolation point and a precoding vector *P*_{2/4} at a second interpolation point is Δ*θ*₂ = *θ*_{2/4} - *θ*_{1/4} ; an angle variation between the precoding vector *P*_{2/4} at the second interpolation point and a precoding vector *P*_{3/4} at a third interpolation point is Δ*θ*₃ = *θ*_{3/4} - *θ*_{2,4} ; and an angle variation between the precoding vector *P*_{3/4} at the third interpolation point and the precoding vector *P*₁ is Δ*θ*₄ = *θ*_{4/4} - *θ*_{3/4}.

A first example of a linear interpolation relation satisfied between the precoding vector *P*₀ and the precoding vector *P*₁ is as follows: ${P}_{t} = {P}_{0} ⋅ t + {P}_{1} ⋅ \left(1-t\right)$

For related content of each parameter, refer to content of a same parameter in the first example of the manifold interpolation relation. Details are not described herein again.

A second example of the linear interpolation relation satisfied between the precoding vector *P*₀ and the precoding vector *P*₁ is as follows: ${P}_{t} = {P}_{0} ⋅ {θ}_{t} + {P}_{1} ⋅ \left(1-{θ}_{t}\right)$ ${θ}_{t} = \frac{1}{n} - \frac{n - 1}{2} Δ θ + \left(nt-1\right) Δ θ$

For content of each parameter, refer to content of a same parameter in the second example of the manifold interpolation relation. Details are not described herein again.

A third example of the linear interpolation relation satisfied between the precoding vector *P*₀ and the precoding vector *P*₁ is as follows: ${P}_{t} = {P}_{0} ⋅ {θ}_{t} + {P}_{1} ⋅ \left(1-{θ}_{t}\right)$

For content of each parameter, refer to content of a same parameter in the third example of the manifold interpolation relation. Details are not described herein again.

As described above, the interpolation method in this embodiment is not limited to the manifold interpolation method and the linear interpolation method. With reference to FIG. 6, the following describes distribution of interpolation points in the manifold interpolation method, the linear interpolation method, and another example interpolation method.

As shown in FIG. 6, a line at the top represents a diagram of distribution of manifold interpolation points, a line in the middle represents a diagram of distribution of linear interpolation points, and a line at the bottom represents distribution of interpolation points in another possible interpolation method.

In this embodiment, after receiving the first information (or further receiving the second information), the terminal device may obtain, according to the interpolation method indicated by the first information, precoding indicators corresponding to all subbands in the bandwidth occupied by the reference signal, to perform precoding processing on each subband of the terminal device based on the precoding indicators, so as to send an uplink signal.

In some possible implementations, the network device may indicate, to the terminal device, a precoding indicator of each subband in the bandwidth occupied by the reference signal. In this implementation, optionally, the network device may further send information to the terminal to indicate that the precoding indicator sent by the network device is for a conventional method for performing precoding indication on each subband. In this implementation, the terminal may precode each subband by using a received precoding indicator of each subband, to send the uplink signal.

In some possible implementations, the terminal may send fourth information to the network device, where the fourth information indicates an interpolation method supported by the terminal. In other words, the fourth information indicates a precoding calculation capability of the terminal, for example, whether the terminal is capable of performing precoding according to the manifold interpolation method.

In this implementation, the first interpolation method indicated by the network device may be determined based on the precoding calculation capability reported by the terminal.

For example, if the terminal supports the manifold interpolation method, the first interpolation method indicated by the network device may be the manifold interpolation method.

For another example, if the terminal does not support the manifold interpolation method but supports the linear interpolation method, the first interpolation method indicated by the network device may be the linear interpolation method.

For still another example, if the terminal does not support the manifold interpolation method and the linear interpolation method, the network device may indicate the conventional method for performing precoding indication on each subband. In this case, the network device sends the precoding indicator of each subband to the terminal.

In the foregoing embodiment, a low-overhead MIMO uplink high-precision subband TPMI indication method based on a PMI indication of partial subbands, an interpolation method indication, and an interpolation method-related parameter greatly reduces signaling overheads of uplink precoding, thereby improving communication performance.

The method in the foregoing embodiment may be referred to as an interpolation method in frequency domain. An interpolation idea of the precoding indicator in this application may be further used in spatial domain, that is, used for an antenna port.

A difference between an embodiment in which the interpolation idea of the precoding indicator in this application is used in spatial domain and the embodiment shown in FIG. 3 is as follows: The first precoding indicator includes a precoding indicator corresponding to each of a first part of antenna ports, and the first part of antenna ports includes partial antenna ports occupied by the reference signal.

For example, as shown in FIG. 7, the terminal occupies 16 antenna ports in spatial domain, and the first precoding indicator indicated by the network device to the terminal includes a precoding indicator of an antenna port *P*₀ and a precoding indicator of an antenna port *P*₁. The terminal may perform interpolation based on the indication of the first information to obtain a precoding indicator of another antenna port, for example, an antenna port *Pₜ* .

Another difference between the embodiment in which the interpolation idea of the precoding indicator in this application is used in spatial domain and the embodiment shown in FIG. 3 is as follows: The second information sent by the network device to the terminal device may be replaced with third information.

In an example, the third information may indicate at least one of the following information: a quantity of antennas included in each antenna port, which may also be referred to as a spatial-domain precoding granularity; a location of each of the first part of antenna ports in the antenna ports occupied by the reference signal; a quantity of precoding indicators included in the first precoding indicator, indicating a quantity of interpolation points for spatial-domain precoding; an angle variation between precoding vectors indicated by precoding indicators corresponding to the antenna ports occupied by the reference signal; or distribution of precoding indicators corresponding to antenna ports in the antenna ports occupied by the reference signal, indicating distribution of spatial-domain interpolation points.

It may be understood that, for other content in the embodiment in which the interpolation idea of the precoding indicator in this application is used in spatial domain, refer to corresponding content in the embodiment shown in FIG. 3. For example, the subband in the embodiment shown in FIG. 3 may be replaced with the antenna port.

Content described in the foregoing embodiments is as follows: The terminal sends a reference signal to the network device. The network device measures the received reference signal, feeds back, to the terminal, a precoding indicator corresponding to partial subbands or a precoding indicator corresponding to partial antenna ports, and indicates an interpolation method. The terminal restores precoding indicators corresponding to subbands in an entire bandwidth. It may be understood that the terminal and the network device in the foregoing content are exchanged. For example, the network device sends a reference signal to the terminal. The terminal measures the received reference signal, and feeds back, to the network, a precoding indicator corresponding to partial subbands or a precoding indicator corresponding to partial antenna ports (even indicates an interpolation method). The network restores precoding indicators corresponding to subbands in an entire bandwidth. This also falls within the scope of the inventive concept of this application.

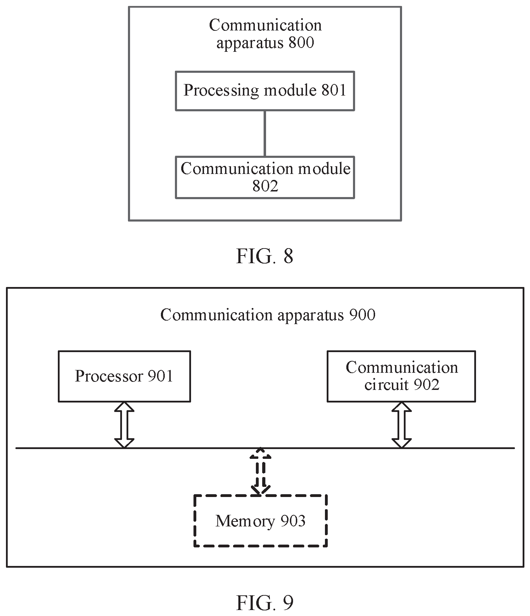

FIG. 8 is a diagram of a structure of a communication apparatus according to an embodiment of this application. As shown in FIG. 8, the apparatus 800 may include a processing module 801 and a communication module 802.

In a first example, the apparatus 800 may be configured to implement the communication method implemented by the terminal in any embodiment shown in FIG. 3. For example, the processing module 801 is configured to implement processing-related steps performed by the terminal device in any embodiment shown in FIG. 3, and the communication module 802 is configured to implement a sending step and/or a receiving step performed by the terminal device in any embodiment shown in FIG. 3.

In a second example, the apparatus 800 may be configured to implement the communication method implemented by the network device in any embodiment shown in FIG. 3. For example, the processing module 801 is configured to implement processing-related steps performed by the network device in any embodiment shown in FIG. 3, and the communication module 802 is configured to implement a sending step and/or a receiving step performed by the network device in any embodiment shown in FIG. 3.

FIG. 9 is a diagram of a structure of a communication apparatus according to another embodiment of this application. As shown in FIG. 9, the apparatus 900 includes a processor 901 and a communication circuit 902. The processor 901 and the communication circuit 902 are coupled to each other. It may be understood that the communication circuit 902 may be a transceiver or an input/output interface. Optionally, the apparatus 900 may further include a memory 903, configured to store instructions executed by the processor 901, or store input data needed by the processor 901 to run the instructions, or store data generated after the processor 901 runs the instructions. It may be understood that the memory 903 may be located outside the processor 901, or may be located inside the processor 901.

In an example, the processor 901 is configured to implement a function of the processing module 801, and the communication circuit 902 is configured to implement a function of the communication module 802.

The apparatus 900 may be a communication device, or may be a chip used in the communication device. For example, the apparatus 900 may be a UE, a chip used in the UE, a network device, or a chip used in the network device. It may be understood that when the apparatus 900 is the UE or the network device, the communication circuit 602 may be a transceiver.

Some embodiments of this application further provide a computer program product. When the computer program product runs on a processor, the method implemented by the terminal device in any one of the foregoing embodiments may be implemented, or the method implemented by the network device in any one of the foregoing method embodiments may be implemented.

Some embodiments of this application further provide a computer-readable storage medium. The computer-readable storage medium includes computer instructions. When the computer instructions are run on a processor, the method implemented by the terminal device in any one of the foregoing embodiments may be implemented, or the method implemented by the network device in any one of the foregoing method embodiments may be implemented.

Some embodiments of this application further provide a communication system. The system may implement the method implemented by the terminal device and the network device in any one of the foregoing embodiments.

It may be understood that the processor in embodiments of this application may be the following device or all or some circuits configured to perform a processing function in the following device: a central processing unit (central processing unit, CPU); or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in the network device or the terminal device as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise specified or there is a logic conflict, terms and/or descriptions of different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a terminal, wherein the method comprises:
sending a reference signal; and
receiving first information from a network device, wherein the first information indicates a first interpolation method, and the first interpolation method is used to perform interpolation processing on a first precoding indicator, wherein
the first precoding indicator comprises a precoding indicator corresponding to each of a first part of subbands, and the first part of subbands comprises partial subbands in a bandwidth occupied by the reference signal; or the first precoding indicator comprises a precoding indicator corresponding to each of a first part of antenna ports, and the first part of antenna ports comprises partial antenna ports occupied by the reference signal.

2. The method according to claim 1, wherein the first interpolation method is a manifold interpolation method.

3. The method according to claim 1 or 2, wherein when the first precoding indicator comprises the precoding indicator corresponding to each of the first part of subbands, the method further comprises:
receiving second information from the network device, wherein the second information indicates at least one of the following information: a quantity of resource blocks RBs occupied by each subband, a location of each of the first part of subbands in the bandwidth, a quantity of precoding indicators comprised in the first precoding indicator, an angle variation between precoding vectors indicated by precoding indicators corresponding to subbands in the bandwidth, or distribution of precoding indicators corresponding to subbands in the bandwidth.

4. The method according to any one of claims 1 to 3, wherein when the first precoding indicator comprises the precoding indicator corresponding to each of the first part of antenna ports, the method further comprises:
receiving third information from the network device, wherein the third information indicates at least one of the following information: a quantity of antennas comprised in each antenna port, a location of each of the first part of antenna ports in the antenna ports occupied by the reference signal, a quantity of precoding indicators comprised in the first precoding indicator, an angle variation between precoding vectors indicated by precoding indicators corresponding to the antenna ports occupied by the reference signal, or distribution of precoding indicators corresponding to antenna ports in the antenna ports occupied by the reference signal.

5. The method according to claim 3 or 4, wherein that the second information indicates the angle variation comprises: the second information indicates an index of the angle variation.

6. The method according to any one of claims 3 to 5, wherein that the second information indicates the distribution comprises: the second information indicates an index of the distribution.

7. The method according to any one of claims 1 to 6, wherein that the first information indicates the first interpolation method comprises: the first information indicates an index of the first interpolation method among a plurality of interpolation methods.

8. The method according to any one of claims 1 to 7, wherein the method further comprises:
sending fourth information to the network device, wherein the fourth information indicates an interpolation method supported by the terminal.

9. A communication method, applied to a network device, wherein the method comprises:
receiving a reference signal from a terminal device; and
sending first information, wherein the first information indicates a first interpolation method, and the first interpolation method is used to perform interpolation processing on a first precoding indicator, wherein
the first precoding indicator comprises a precoding indicator corresponding to each of a first part of subbands, and the first part of subbands comprises partial subbands in a bandwidth occupied by the reference signal; or the first precoding indicator comprises a precoding indicator corresponding to each of a first part of antenna ports, and the first part of antenna ports comprises partial antenna ports occupied by the reference signal.

10. The method according to claim 9, wherein the first interpolation method is a manifold interpolation method.

11. The method according to claim 9 or 10, wherein when the first precoding indicator comprises the precoding indicator corresponding to each of the first part of subbands, the method further comprises:
sending second information, wherein the second information indicates at least one of the following information: a quantity of resource blocks RBs occupied by each subband, a location of each of the first part of subbands in the bandwidth, a quantity of precoding indicators comprised in the first precoding indicator, an angle variation between precoding vectors indicated by precoding indicators corresponding to subbands in the bandwidth, or distribution of precoding indicators corresponding to subbands in the bandwidth.

12. The method according to any one of claims 9 to 11, wherein when the first precoding indicator comprises the precoding indicator corresponding to each of the first part of antenna ports, the method further comprises:
sending third information, wherein the third information indicates at least one of the following information: a quantity of antennas comprised in each antenna port, a location of each of the first part of antenna ports in the antenna ports occupied by the reference signal, a quantity of precoding indicators comprised in the first precoding indicator, an angle variation between precoding vectors indicated by precoding indicators corresponding to the antenna ports occupied by the reference signal, or distribution of precoding indicators corresponding to antenna ports in the antenna ports occupied by the reference signal.

13. The method according to claim 11 or 12, wherein that the second information indicates the angle variation comprises: the second information indicates an index of the angle variation.

14. The method according to any one of claims 11 to 13, wherein that the second information indicates the distribution comprises: the second information indicates an index of the distribution.

15. The method according to any one of claims 9 to 14, wherein that the first information indicates the first interpolation method comprises: the first information indicates an index of the first interpolation method among a plurality of interpolation methods.

16. The method according to any one of claims 9 to 15, wherein the method further comprises:
receiving fourth information from the terminal device, wherein the fourth information indicates an interpolation method supported by the terminal.

17. A communication apparatus, comprising a functional module configured to implement the method according to any one of claims 1 to 16.

18. A communication apparatus, comprising a memory and a processor, wherein the memory is configured to store program instructions, and the processor is configured to execute the program instructions in the memory to implement the method according to any one of claims 1 to 16.

19. A computer-readable storage medium, wherein the computer-readable storage medium stores program code to be executed by a computer, and the program code comprises instructions for implementing the method according to any one of claims 1 to 16.

20. A computer program product, wherein the computer program product comprises instructions for implementing the communication method according to any one of claims 1 to 16.
